(19) Europäisches Patentamt
European Patent Office
Office européen des brevets

(11) Numéro de publication : **0 316 391 B1**

(12) # FASCICULE DE BREVET EUROPEEN

(45) Date de publication du fascicule du brevet : **13.11.91 Bulletin 91/46**

(51) Int. Cl.[5] : **F25B 17/08,** C09K 5/00, F25B 47/02

(21) Numéro de dépôt : **88904565.4**

(22) Date de dépôt : **20.05.88**

(86) Numéro de dépôt international : **PCT/FR88/00256**

(87) Numéro de publication internationale : **WO 88/09466 01.12.88 Gazette 88/26**

(54) **PROCEDE POUR PRODUIRE DU FROID PAR REACTION SOLIDE-GAZ.**

(30) Priorité : **22.05.87 FR 8707210**

(43) Date de publication de la demande : **24.05.89 Bulletin 89/21**

(45) Mention de la délivrance du brevet : **13.11.91 Bulletin 91/46**

(84) Etats contractants désignés : **AT BE CH DE FR GB IT LI LU NL SE**

(73) Titulaire : **FAIVELEY ENTREPRISES**
**93, rue du Docteur-Bauer**
**F-93404 Saint-Ouen Cedex (FR)**

Titulaire : **SOCIETE NATIONALE ELF AQUITAINE**
**Tour Elf, 2, Place de la Coupole, La Défense 6**
**F-92400 Courbevoie (FR)**

(72) Inventeur : **CROZAT, Georges**
**59, rue Jules-Péan**
**F-66000 Perpignan (FR)**
Inventeur : **LEBRUN, Michel**
**31, rue Charnay**
**F-78190 Elancourt (FR)**

(74) Mandataire : **Bouju, André**
**Cabinet André Bouju B.P. 6250**
**F-75818 Paris Cédex 17 (FR)**

**EP 0 316 391 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé pour produire du froid par réaction solide-gaz.

Le procédé visé par l'invention est basé sur l'utilisation du système dit "pompe thermochimique", dont les caractéristiques principales sont les suivantes :

– on utilise pour le fonctionnement du système lui-même, l'énergie thermique ; l'énergie électrique n'est éventuellement utilisée que pour la circulation des fluides caloporteurs,

– on utilise, comme "moteur chimique" une réaction renversable entre un solide et un gaz du type :

$$\langle \text{solide A} \rangle + (G) \underset{2}{\overset{1}{\rightleftarrows}} \langle \text{solide B} \rangle$$

La réaction est exothermique dans le sens (1), ce qui veut dire que dans ce sens elle produit de la chaleur et endothermique dans le sens (2), c'est-à-dire que dans ce sens elle produit du froid.

Un tel système permet le stockage d'énergie sous forme chimique et présente des domaines d'application variés.

De plus, un tel système permet la production, à partir d'une source de chaleur à la température Ts, de chaleur à la température Tu telle que :

Tu < Ts

Dans ce cas, le système est appelé "pompe à chaleur chimique".

Un tel système permet également la production, à partir d'une source de chaleur à la température T's, de chaleur à la température T'u telle que :

T'u > T's

Dans ce cas, le système est appelé "thermo transformateur chimique".

Grâce à ce système, il est possible de produire de l'énergie frigorifique à partir d'une source de chaleur et de produire simultanément, à partir d'une source de chaleur à la température T″s, de la chaleur à la température T″u (T″u < T″s) et de l'énergie frigorifique.

Suivant les cas, l'utilisation de la chaleur ou du froid produit est simultanée à la consommation d'énergie à haute température (Ts, T's, T″s) ou différée dans le temps (effet de stockage).

On rappellera tout d'abord le principe de la pompe thermochimique.

On considérera successivement, pour une meilleure compréhension du système, les deux cas suivants :

– Production de froid ou de chaleur par utilisation d'une réaction solide + gaz (avec évaporation + condensation).

– Production de froid ou de chaleur par utilisation de deux réactions solide + gaz.

### A/ La production de froid par utilisation d'une réaction solide + gaz

Certains solides peuvent, dans des conditions données de température et de pression, réagir avec certains gaz ; cette réaction aboutit à la formation d'un composé chimique défini, généralement solide, et s'accompagne d'un dégagement de chaleur.

Lorsque, dans d'autres conditions de température et de pression, on apporte de la chaleur au composé ainsi formé, on constate une libération du gaz et la formation du produit solide d'origine.

Le fonctionnement du système s'effectue donc en deux phases décalées dans le temps (voir figure 1).

Dans la première phase appelée "phase d'évaporation synthèse", on a simultanément évaporation d'un fluide frigorigène et réaction avec le solide du gaz ainsi formé :

[G] liq. → (G) gaz

<S> sol. + (G) → <S, G> sol. (I)

Le fluide F1 fournit la chaleur ΔHL à l'évaporateur E.

Le composé [G] s'évapore et le gaz formé va se fixer dans le réacteur R sur le solide <S> pour donner le composé <S, G>.

La réaction s'accompagne, au sein du réacteur R, d'un dégagement de chaleur ΔHR, celle-ci étant évacuée par le fluide F2.

La source de froid est donc l'évaporateur E, le froid étant utilisé directement ou indirectement à partir du fluide F1.

Dans le cas d'un procédé destiné à fournir de la chaleur, on utilise la chaleur ΔHR.

Dans le cas d'une machine frigorifique, on utilise la chaleur ΔHL.

Dans la seconde phase appelée "phase de décomposition-condensation", on a simultanément décomposition du solide <S, G> avec libération du gaz (G) dans le réacteur R, et condensation de (G) dans le condenseur C :

<S, G> → <S> + (G)
(G) gaz → [G] liq.

La chaleur ΔHR est apportée au solide <S, G> contenu dans le réacteur R par le fluide F3 (ou le fluide F2 utilisé précédemment).

Sous l'effet de la chaleur, le composé (G) est libéré et va se condenser en C, la condensation s'accompagnant du dégagement de chaleur ΔHL, celle-ci étant évacuée par le fluide F4.

Dans le cas d'un procédé destiné à fournir de la chaleur, on utilise ΔHL.

Les caractéristiques thermodynamiques de ce système sont les suivantes :

Comme on est en présence d'une véritable réaction chimique entre un solide et un gaz, on a un système monovariant à l'équilibre, c'est-à-dire qu'il existe une relation univoque entre la température et la pression de la forme :

$$\log P = A - B/T$$

Expression dans laquelle P est la pression, T la température (exprimée en degrés K), A et B étant des constantes caractéristiques du couple solide/gaz utilisé.

Les deux phases du fonctionnement peuvent ainsi être représentées dans un diagramme pression (P)/température (T) (voir figure 2).

Sur cette figure :

(I) est la droite d'équilibre (G) ⇄ [G] et
(J) est la droite d'équilibre <S> + (G) ⇄ <S, G>

La droite d'équilibre (I) détermine deux zones dans lesquelles il y a soit condensation, soit évaporation de G.

La droite d'équilibre (J) détermine deux zones dans lesquelles il y a soit synthèse, à partir de <S> et de (G), du composé <S, G>, soit décomposition du solide <S, G> avec libération de (G).

Au cours de la phase d'évaporation-synthèse, [G] s'évapore à la température TE et va réagir avec le solide <S> qui est à la température TA.

Cette température TA est telle que le point de fonctionnement du solide (point P) est en zone de synthèse.

Cette phase s'effectue à la pression PB.

Au cours de la phase de décomposition-condensation, le composé <S, G> est à la température TD telle que le point de fonctionnement du solide (point Q) est en zone de décomposition.

Le gaz (G) libéré va se condenser à la température TC.

Cette phase s'effectue à la pression HP, telle que PH > PB.

B/ Production de chaleur par utilisation de deux réaction solide-gaz

Ce système est proche du précédent mais au lieu d'effectuer la condensation et l'évaporation de G, on le fait réagir avec un deuxième solide :

Par conséquent, les réactions suivantes ont lieu successivement :

Phase I :

<S2, G> → <S2> + (G) - ΔH2
<S1> + (G) → <S1, G> + ΔH1

Phase II :

<S1, G> → <S1> + (G) - ΔH1
<S2> + (G) → <S2, G> + ΔH2

Comme précédemment, on peut représenter le fonctionnement du système dans un diagramme pression/température (voir figure 2A).

Sur cette figure :

(I) est la droite d'équilibre <S1> + (G) — <S1, G>

(J) est la droite d'équilibre <S2> + (G) — <S2, G>

Le fluide G est toujours à l'état gazeux et circule alternativement entre deux réacteurs, dont l'un contient le solide <S1> (ou <S1, G>) et l'autre solide <S2> (ou <S2, G>).

Si ce système est utilisé comme pompe à chaleur, le bilan énergétique s'établit comme suit :

- apport à TD2 de ΔH2
- utilisation à T1S de ΔH1 et à T2S de ΔH2
- "pompage" à TD1 de ΔH1 (énergie gratuite).

Les réalisations connues pour produire du froid selon le principe décrit au paragraphe A ci-dessus ne comportent qu'un seul réacteur associé à un évaporateur, un condenseur et un collecteur de froid. Ces réalisations ne permettent pas de produire du froid en continu.

Le document FR-A-2 113 344 décrit un dispositif comprenant deux réacteurs qui contiennent un composé solide susceptible de réagir avec un gaz selon une réaction exothermique, ces réacteurs étant reliés à un condenseur, un collecteur de gaz et un évaporateur, l'intérieur des réacteurs étant en relation d'échange thermique avec une source de chaleur, des moyens positifs étant prévus pour déclencher successivement des réactions solide-gaz dans les deux réacteurs et pour commander les ouvertures et fermetures des différents circuits de communication entre les réacteurs, le condenseur, le collecteur et l'évaporateur, dans un ordre prédéterminé pour obtenir une production continue de froid.

Le but de la présente invention est d'apporter des améliorations aux réalisations connues utilisant les systèmes et principes précités.

L'invention vise ainsi un procédé pour produire du froid, mettant en oeuvre un dispositif comprenant deux réacteurs (R1, R2) qui contiennent un composé solide susceptible de réagir avec un gaz selon une réaction exothermique, ces réacteurs étant reliés à un condenseur (C), un collecteur de gaz (Co) et un évaporateur (E), l'intérieur des réacteurs étant en relation d'échange thermique avec une source (S) de chaleur, des moyens étant prévus pour déclencher successivement les réactions solide-gaz dans les deux réacteurs et pour commander les ouvertures et fermetures des différents circuits de communication entre les réacteurs, le condenseur, le collecteur et l'évaporateur, dans un ordre prédéterminé pour obtenir une production continue de froid, ledit procédé comprenant les étapes suivantes :

A) ouverture du circuit entre l'un (R1) des réacteurs et l'évaporateur (E) et entre ce dernier et le collecteur de gaz (Co) dès que la pression du gaz dans l'évaporateur (E) est supérieure à celle dans le réacteur (R1),

B) ouverture du circuit entre l'autre réacteur (R2) et l'évaporateur (E) et entre ce dernier et le collecteur de gaz (Co) dès que la pression du gaz dans l'évaporateur (E) est supérieure à celle dans le réacteur (R2),

C) ouverture du circuit entre le réacteur (R1) et la source (S) de chaleur extérieure pour chauffer le solide contenu dans ce réacteur,

D) fermeture sous l'effet de la pression régnant dans le réacteur (R1) du circuit compris entre ce dernier et l'évaporateur (E) et ouverture du circuit entre le réacteur (R1) et le condenseur (C) dès que la pression dans le réacteur (R1) est supérieure à celle dans le condenseur (C),

E) fermeture du circuit entre le réacteur (R1) et la source (S) de chaleur et ouverture du circuit entre le réacteur (R2) et la source (S) de chaleur,

F) fermeture sous l'effet de la pression régnant dans le réacteur (R2) du circuit compris entre ce dernier et l'évaporateur (E) et ouverture du circuit entre le réacteur (R2) et le condenseur (C) dès que la pression dans le réacteur (R2) est supérieure à celle dans le condenseur (C),

G) fermeture, après baisse de pression dans le réacteur (R1) du circuit entre celui-ci et le condenseur (C) et ouverture du circuit entre ce réacteur (R1) et l'évaporateur (E),

et, pour assurer le dégivrage pendant une des étapes B-G,

H) fermeture des circuits entre l'évaporateur (E) et les deux réacteurs (R1) et (R2), ouverture du circuit entre l'évaporateur (E) et le condenseur (C) et ouverture du circuit entre l'évaporateur (E) et le collecteur de gaz (Co).

Selon une version avantageuse de l'invention, le dispositif comprend un troisième réacteur renfermant ledit composé solide susceptible de réagir avec le gaz et relié avec la source de chaleur extérieure, le condenseur, le collecteur et l'évaporateur, des moyens étant prévus pour déclencher successivement les réactions solide-gaz dans les trois réacteurs d'une manière telle que le troisième réacteur puisse stocker de l'énergie sans apport d'énergie autre que celle nécessaire à la circulation du fluide caloporteur.

D'autres particularités et avantages de l'invention apparaîtront encore dans la description ci-après.

Aux dessins annexés donnés à titre d'exemples non limitatifs :

- la figure 3 est le schéma d'un dispositif de production de froid à un seul réacteur,
- la figure 4 est un schéma analogue à la figure 3 montrant la première étape du fonctionnement du dispositif selon la figure 3,
- la figure 5 montre la seconde étape du fonctionnement du dispositif selon la figure 3,

– la figure 6 montre la troisième étape du fonctionnement du dispositif selon la figure 3.

– la figure 7 est le schéma d'un dispositif de production de froid à deux réacteurs,

– la figure 8 montre la première étape du fonctionnement du dispositif selon la figure 7,

– la figure 9 montre la seconde étape du fonctionnement du dispositif selon la figure 7,

– la figure 10 montre la troisième étape du fonctionnement du dispositif selon la figure 7,

– la figure 11 montre la quatrième étape du dispositif selon la figure 7,

– la figure 12 est le schéma d'un dispositif de production de froid à trois réacteurs,

– la figure 13 montre la première étape du fonctionnement du dispositif selon la figure 12,

– la figure 14 montre la seconde étape du fonctionnement du dispositif selon la figure 12,

– la figure 15 montre la troisième étape du fonctionnement du dispositif selon la figure 12,

– la figure 16 montre la quatrième étape du fonctionnement du dispositif selon la figure 12,

– la figure 17 est le schéma d'un dispositif permettant de produire de la chaleur.

Dans la réalisation de la figure 3, on a représenté un dispositif de production de froid discontinu à partir du phénomène physico-chimique mettant en réaction le chlorure de manganèse et l'ammoniac, comme indiqué ci-après :

<$Mn\,Cl_2$, $2NH_3$> + $4(NH_3)$ $\rightarrow$ <$MnCl_2$, $6NH_3$>

Ce dispositif illustré aux figures 3 à 6 n'est pas utilisé dans le procédé selon l'invention. Il est décrit ici à titre d'arrière plan pour illustrer des étapes qu'on retrouvera dans le procédé de l'invention décrit plus loin en référence aux figures 7 à 16.

Ce dispositif illustré aux figures 3 à 6 comprend :

– un réacteur R contenant le milieu solide réactionnel <$MnCl_2$, $2NH_3$> qui est relié à un condenseur C, un collecteur Co de gaz G liquéfié compris entre ce dernier et un évaporateur E.

Ce dispositif comprend d'autre part un clapet anti-retour C1 sur le circuit reliant le réacteur R au condenseur C, un clapet anti-retour C2 sur le circuit reliant l'évaporateur E au réacteur R, un détenteur thermostatique DT sur le circuit reliant le réacteur R à l'évaporateur E, une vanne à pression contrôlée VPC, une électrovanne EV1 isolant le réacteur R du reste du circuit, une électrovanne EV2 isolant l'évaporateur E du réacteur R, deux électrovannes EV3 et EV4 pour le dégivrage et une électrovanne EV5 permettant de distribuer un fluide caloporteur $F_4$ dans l'échangeur EC contenu dans le réacteur E et relié à une source de chaleur extérieure S au moyen d'une pompe P.

Les différentes étapes du fonctionnement du dispositif sont illustrées par les figures 4 à 6 et par le tableau ci-après :

Tableau 1

| | Arrêt | Démarrages | Cycle | | Dégivrage |
|---|---|---|---|---|---|
| Etapes | 0 | 0 | 1 | 2 | 3 |
| EV1 | F | 0 | 0 | 0 | 0 |
| EV2 | F | 0 | 0 | 0 | F |
| EV3 | F | F | F | F | 0 |
| EV4 | F | F | F | F | 0 |
| EV5 | F | F | F | 0 | 0 |
| C1 | F | F | F | 0 | 0 |
| C2 | F | F | 0 | F | F |

* 0 = ouvert ; F = fermé

Etat initial : étape 0

Le réacteur R a un potentiel maximum de froid, c'est-à-dire que le solide à l'intérieur est composé de sel <S> susceptible de réagir avec le gaz (G).

Toutes les électrovannes sont fermées et le collecteur Co est rempli de fluide frigorigène [G]. Pour la mise en route on ouvre l'électro-vanne EV1.

Etape 1 (figure 4)

L'électrovanne EV2 s'ouvre, le fluide [G] circule du collecteur Co vers l'évaporateur E. Dans ce dernier, il se vaporise, la chaleur étant cédée par le fluide F2 par exemple de l'air qui est utilisé pour véhiculer la production de froid. Le fluide F2 diffuse les frigories dans l'enceinte à refroidir. Dans l'exemple représenté, l'air est soufflé dans cette enceinte au moyen d'un ventilateur $V_1$.

Le détendeur thermostatique (VPC) contrôle la pression dans l'évaporateur E et par conséquent la température du liquide [G] en ébullition dans l'évaporateur E. La pression dans l'évaporateur E étant supérieure

à la pression dans le réacteur R, le clapet C2 s'ouvre et le gaz (G) va réagir avec le solide <S> dans le réacteur R, la chaleur de réaction étant évacuée par l'intermédiaire d'un échangeur ou circule F3. Le fluide F3 est de l'air pulsé par un moto-ventilateur V3 qui évacue la chaleur de réaction exothermique vers l'extérieur.

Etape 2 (figure 5)

La réaction de synthèse étant terminée dans le réacteur R, la vanne EV5 s'ouvre, le solide <S, G> présent dans le réacteur R, est chauffé par le fluide F4 qui est par exemple une huile thermale. Lorsque la pression dans le réacteur R est supérieure à celle régnant au condenseur C, ou au collecteur Co, le clapet C1 s'ouvre, le clapet C2 s'étant fermé dès que la pression au réacteur R était supérieure à celle régnant dans l'évaporateur E.

Le gaz issu du réacteur R va se condenser au condenseur C, puis s'écouler dans le collecteur Co, la chaleur de condensation étant évacuée par le fluide F1, le fluide F1 étant de l'air comme dans une installation traditionnelle à compression, soufflé au moyen d'un ventilateur V2.

Durant cette étape 2 aucune production de froid n'est assurée, le fluide [G] ne pouvant circuler dans l'évaporateur. La production de froid est donc discontinue.

Etape 3 (figure 6)

Cette étape, lorsqu'elle intervient dans le cycle, correspond au dégivrage. Celui-ci se fait au sein de l'évaporateur E lui-même en l'utilisant comme condenseur.

L'enclenchement de l'opération de dégivrage doit se produire au niveau de l'étape 2, c'est-à-dire lors de l'opération de décomposition du solide dans le réacteur R.

Pour cette opération, simultanément, la vanne EV2 se ferme et la vanne EV3 s'ouvre.

Le gaz (G) issu de la réaction de décomposition dans le réacteur R va se condenser préférentiellement dans l'évaporateur E et ainsi assurer le dégivrage. La vanne EV4 étant ouverte, le fluide [G] condensé s'écoule dans le collecteur Co.

Etape 4

Dans cette étape, on revient à l'étape 1, c'est-à-dire à la production de froid par l'évaporateur E.

Les dispositifs de production de froid que l'on va maintenant décrire permettent de produire du froid en continu, selon le procédé de la présente invention, ce qui les rend particulièrement adaptés aux besoins industriels, notamment dans les véhicules de transport.

Le dispositif représenté sur la figure 7 comprend principalement :

- deux réacteurs identiques (R1 et R2) contenant le milieu solide réactionnel,
- un condenseur C,
- un collecteur Co de gaz liquéfié G,
- un évaporateur E,
- deux clapets anti-retour (C1 et C2) sur les circuits reliant les réacteurs R1 et R2 au condenseur C,
- deux clapets anti-retour (C3 et C4) sur les circuits reliant l'évaporateur E aux réacteurs R1 et R2,
- un détendeur thermostatique (DT) entre l'évaporateur E et le collecteur Co,
- une vanne à pression contrôlée (VPC) entre les réacteurs R1, R2 et l'évaporateur E,
- deux électrovannes (EV1 et EV2) isolant les réacteurs R1 et R2 du reste du circuit,
- une électrovanne (EV5) isolant l'évaporateur E des réacteurs R1 et R2,
- deux électrovannes (EV6 et EV7) pour le dégivrage,
- deux électrovannes (EV3 et EV4) permettant de distribuer un fluide F4 dans les échangeurs EC1 et EC2 contenus dans les réacteurs R1 et R2.

Les différentes étapes du fonctionnement de ce dispositif sont illustrées par les figures 8 à 11 et par le tableau 2 ci-après.

Tableau 2

| | Démarrage | | cycle | | Dégivrage* | | Recharge |
|---|---|---|---|---|---|---|---|
| Etapes | 0 | 1 | 2 | 3 | 4 | 5 | 6 |
| EV1 | F | 0 | 0 | 0 | 0 | 0 | 0 |
| EV2 | F | F | 0 | 0 | 0 | 0 | 0 |
| EV3 | F | F | 0 | F | F | F | 0 |
| EV4 | F | F | F | 0 | 0 | 0 | 0 |
| EV5 | F | 0 | 0 | 0 | F | 0 | 0 |
| EV6 | F | F | F | F | 0 | F | F |
| EV7 | F | F | F | F | 0 | F | F |
| F3 vers | - | R1 | R2 | R1 | R1 | R1 | - |
| C1 | F | F | 0 | F | F | F | 0 |
| C2 | F | F | F | 0 | 0 | 0 | 0 |
| C3 | F | 0 | F | 0 | F | 0 | F |
| C4 | F | F | 0 | F | F | F | F |

* cas où le dégivrage intervient durant l'étape 3

Etat initial : Etape 0

Les réacteurs R1 et R2 ont un potentiel maximum de froid, c'est-à-dire que les solides à l'intérieur sont composés de sel <S> susceptible de réagir avec le gaz (G). Toutes les électrovannes sont fermées et le collecteur Co est rempli de fluide frigorigène.

Etape 1 : (figure 8)

Les électrovannes EV1 et EV5 s'ouvrent. Le fluide G circule du collecteur Co vers l'évaporateur E. Dans ce dernier il se vaporise, la chaleur étant cédée par le fluide F2 qui est donc utilisé pour produire du froid.

Le fluide F2 étant de l'air, il diffuse les frigories dans l'enceinte à refroidir.

Le détendeur thermostatique (DT) empêche le fluide G de circuler à l'état liquide, au-delà de l'évaporateur E. La vanne VPC contrôle le niveau de pression d'évaporation et donc la température d'évaporation. La pression dans l'évaporateur E étant supérieure à la pression dans le réacteur R1, le clapet C3 s'ouvre et le gaz (G) va réagir avec le solide <S> dans R1, la chaleur de réaction étant évacuée par l'intermédiaire d'un échangeur où circule F3. Le fluide F3 est de l'air pulsé par un motoventilateur V3 qui évacue la chaleur de réaction exothermique vers l'extérieur.

Etape 2 : (figure 9)

La réaction de synthèse étant terminée dans le reacteur R1, la vanne EV2 s'ouvre. La pression à l'évaporateur E étant supérieure à la pression régnant dans le réacteur R2, le clapet C4 s'ouvre et le fluide G s'évapore dans l'évaporateur E et va réagir avec le solide <S> présent dans le réacteur R2.

La chaleur d'évaporation est apportée à l'évaporateur E par le fluide F2 et la chaleur de réaction dégagée en R2 est évacuée par le fluide F3.

Simultanément à l'ouverture de la vanne EV2 se produit l'ouverture de la vanne EV3. Le solide <S, G> présent dans le réacteur R1 est chauffé par le fluide F4. Lorsque la pression dans le réacteur R1 est supérieure à celle régnant au condenseur C (ou au collecteur Co), le clapet C1 s'ouvre, le clapet C3 s'étant fermé dès que la pression en R1 était supérieure à celle régnant à l'évaporateur E.

Le gaz (G) issu des réacteurs R1 va se condenser dans le condenseur C , la chaleur de condensation étant évacuée par le fluide F1, et s'écoule dans le collecteur Co.

Etape 3 : (figure 10)

Lorsque les réactions dans les réacteurs R1 et R2 sont terminées, la vanne EV3 se ferme et la vanne EV4 s'ouvre. Le solide <S, G> présent dans R2 est chauffé par le fluide F4. La pression en R2 monte et successivement le clapet C4 se ferme et le clapet C2 s'ouvre. Le gaz (G) issu de R2 va se condenser en C, la chaleur de condensation étant évacuée par le fluide F1, et s'écoule dans le collecteur Co.

Le fluide F3 circule dans l'échangeur E du réacteur R1. Celui-ci se refroidissant, la pression baisse et successivement le clapet C1 se ferme et le clapet C3 s'ouvre. Le fluide (G) s'évapore en E et va réagir dans le réacteur R1 avec le solide <S>. La chaleur d'évaporation est comme précédemment, apportée par le fluide F2 (de l'air) qui se refroidit et est donc utilisé pour la distribution de froid, dans l'enceinte à refroidir.

Etape 4 : (figure 11)

Cette étape pouvant intervenir au cours de l'étape 2 ou 3, concerne l'opération de dégivrage. Celui-ci se fait au sein de l'évaporateur E lui-même en l'utilisant comme condenseur.

Au déclenchement du dégivrage, la vanne EV5 se ferme et la vanne EV6 s'ouvre.

Le gaz (G) issu de la réaction de décomposition va se condenser préférentiellement dans l'évaporateur E.

La chaleur de condensation dégagée assure le dégivrage. La vanne EV7 étant ouverte, le fluide G condensé s'écoule dans le collecteur Co.

Etape 5 :

Cette étape correspond au retour au cycle normal après l'opération de dégivrage. Les vannes EV6 et EV7 se ferment et EV5 s'ouvre.

Le gaz (G) se dirige du réacteur R1 chauffé par le fluide F4 vers le condenseur C et le collecteur Co.

Le gaz G s'évapore en E et va réagir avec le solide <S> dans le réacteur refroidit par le fluide F3. Comme décrit dans l'étape 2 ou 3, le cycle reprend normalement par alternance des étapes 2 ou 3.

Etape 6 :

Cette étape ne correspond pas au cycle de fonctionnement normal mais elle permet de redonner à la machine tout son potentiel frigorifique (étape 0).

Pendant cette étape, il n'y a pas de production de froid et les deux réacteurs R1 et R2 sont ramenés à leur potentiel maximum de froid.

Les vannes EV3 et EV4 sont ouvertes.

Le solide <S, G> présent dans les réacteurs R1 et R2 est chauffé par le fluide F4.

Le gaz (G) produit lors de la décomposition de <S, G> se condense en C et s'écoule dans le collecteur Co. L'opération est terminée lorsqu'il n'y a plus que du solide <S> dans chacun des réacteurs R1 et R2. On

ferme alors les vannes EV1 à EV5, les clapets C1, C2 se fermant par suite de baisse de pression en R1 et R2, celle-ci étant consécutive à l'arrêt du chauffage des réacteurs.

Le dispositif ci-dessus, lorsqu'il met en oeuvre les réactions solide-gaz décrites précédemment permet non seulement une production continue de froid, mais également d'obtenir des températures comprises entre - 40°C et + 10°C optimales pour le transport à basse température de produits alimentaires ou autres.

La figure 12 représente un dispositif de production de froid permettant, à partir d'un phénomène physico-chimique discontinu, d'assurer une production continue de froid et un stockage d'énergie frigorifique.

Ce dispositif comprend principalement :

– trois réacteurs identiques (R1, R2, R3) contenant le milieu solide réactionnel,
– un condenseur C,
– un collecteur Co de gaz liquéfié G,
– un évaporateur E,
– trois clapets anti-retour (C1, C2, C3) sur le circuit reliant les réacteurs R1, R2, R3 au condenseur C,
– trois clapets anti-retour (C4, C5, C6) reliant l'évaporateur E aux réacteurs R1, R2, R3,
– un détendeur thermostatique (DT) entre l'évaporateur E et le collecteur Co,
– trois électrovannes (EV1, EV2, EV3) isolant les réacteurs R1, R2 et R3 du reste du circuit,
– trois électrovannes (EV4, EV5, EV6) permettant de distribuer un fluide F4 dans des échangeurs (EC1, EC2, EC3) contenus dans les réacteurs R1, R2, R3.

Les différentes étapes du fonctionnement de ce dispositif sont représentées sur les figures 13 à 16 et sur le tableau 3 ci-après.

Tableau 3

| ETAPES | 0 | 1 | cycle 2 | 3 | 4 | 5 | 6 |
|---|---|---|---|---|---|---|---|
| EV1 | F | 0 | 0 | 0 | F | 0 | 0 |
| EV2 | F | F | 0 | 0 | F | 0 | 0 |
| EV3 | F | F | F | F | 0 | F | 0 |
| EV4 | F | F | 0 | F | F | F | 0 |
| EV5 | F | F | F | 0 | F | 0 | 0 |
| EV6 | F | F | F | F | F | F | 0 |
| F3 vers | - | R1 | R2 | R1 | R3 | R1 | - |
| C1 | F | F | 0 | F | F | F | 0 |
| C2 | F | F | F | 0 | F | 0 | 0 |
| C3 | F | F | F | F | F | F | 0 |
| C4 | F | 0 | F | 0 | F | 0 | F |
| C5 | F | F | 0 | F | F | F | F |
| C6 | F | F | F | F | 0 | F | F |

Etape 0 : état initial

Les réacteurs R1, R2 et R3 ont un potentiel maximum de froid, c'est-à-dire que les solides à l'intérieur sont constitués par le sel <S> susceptible de réagir avec le gaz (G). Toutes les électrovannes sont fermées et le collecteur Co est rempli de fluide frigorigène [G].

Etape 1 : démarrage (figure 13)

L'électrovanne EV1 s'ouvre. Le fluide [G] circule du collecteur Co vers l'évaporateur E. Dans ce dernier, il se vaporise, la chaleur étant cédée par le fluide F2 qui est utilisé pour distribuer le froid. Le détendeur thermostatique (DT) empêche le fluide [G] de circuler, à l'état liquide, au-delà de l'évaporateur E. La pression dans l'évaporateur étant supérieure à la pression en R1, le clapet C4 s'ouvre et le gaz [G] va réagir avec le solide <S> dans le réacteur R1, la chaleur de réaction étant évacuée par l'intermédiaire d'un échangeur où circule F3.

Etape 2 : cycle (phase 1) (figure 14)

La réaction de synthèse étant terminée dans le réacteur R1, la vanne EV2 s'ouvre. La pression à l'évaporateur E étant supérieure à la pression régnant dans le réacteur R2, le clapet C5 s'ouvre et le fluide [G], qui s'évapore en E, va réagir avec le solide <S> présent dans le réacteur R2.

La chaleur d'évaporation est apportée à l'évaporateur E par le fluide F2 et la chaleur de réaction dégagée en R2 est évacuée par le fluide F3.

Simultanément à l'ouverture de la vanne EV2 se produit l'ouverture de la vanne EV4 : le solide <S, G> présent dans le réacteur R1 est chauffé par le fluide F4. Lorsque la pression en R1 est supérieure à celle régnant au condenseur C (ou au collecteur), le clapet C1 s'ouvre, le clapet C4 s'étant fermé dès que la pression en R1 était supérieure à celle régnant à l'évaporateur E. Le gaz (G) issu de R1 va se condenser dans le condenseur C par le fluide F1, et s'écoule dans le collecteur Co.

Etape 3 : cycle (phase 2) (figure 15)

Lorsque les réactions dans les réacteurs R1 et R2 sont terminées, la vanne EV4 se ferme et la vanne EV5 s'ouvre. Le solide <S, G> présent dans R2 est chauffé par le fluide F4. La pression en R2 augmente et, successivement, le clapet C5 se ferme et le clapet C2 s'ouvre. Le gaz (G) issu de R2 va se condenser dans le condenseur C, la chaleur de condensation étant évacuée par le fluide F1, et s'écoule dans le collecteur Co. Le fluide F3 circule dans l'échangeur dans l'évaporateur E du réacteur R1. Celui-ci se refroidissant, la pression baisse et successivement, le clapet C1 se ferme et le clapet C4 s'ouvre. Le fluide (G) évaporé dans l'évaporateur E va réagir dans le réacteur R1 avec le solide <S>. La chaleur d'évaporation est, comme précédemment, apportée par le fluide F2 qui se refroidit et est donc utilisé pour la production de froid.

L'alternance des phases 1 et 2 constitue le cycle de fonctionnement normal du système.

Etape 4 : Fonctionnement sur stockage (figure 16)

Le fluide F4 n'est pas chauffé et ne circule plus dans le réacteur R2. La circulation de (G), de R2 vers le condenseur C, est interrompue par la fermeture de la vanne EV2.

Le fluide F3 ne circule plus dans le réacteur R1, la circulation de (G) de l'évaporateur vers le réacteur R1 est interrompue par la fermeture de la vanne EV1.

L'électrovanne EV3 est ouverte et le fluide F3 circule dans un échangeur EC3 situé dans le réacteur R3. La pression dans l'évaporateur E étant supérieure à la pression régnant dans R3, le clapet C6 s'ouvre et le fluide (G) évaporé en E va réagir avec le solide <S> en R3 ; la chaleur de réaction est évacuée par F3 et le froid est véhiculé par le fluide F2 refroidi dans l'évaporateur E.

Etape 5 : reprise du cycle (phase 2)

Lorsque le fonctionnement sur stockage est arrêté, le cycle normal reprend à l'étape 3 (cycle : phase 2). La vanne EV3 est fermée et les vannes EV1 et EV2 sont réouvertes. Le fluide F4 est chauffé et circule à nouveau dans le réacteur R2. Le fonctionnement est alors identique à celui décrit dans l'étape 3.

Etape 6 : recharge

cette étape correspond à l'arrêt du cycle et à la remise de l'ensemble du système à l'état initial.

Les vannes EV1, EV2 et EV3 sont ouvertes. Les vannes EV4, EV5 et EV6 étant ouvertes, le fluide F4 circule dans les trois réacteurs R1, R2 et R3. Les solides à l'intérieur de ceux-ci sont chauffés : lorsque la pression en R1, R2 et R3 est supérieure à la pression régnant au condenseur, les clapets C1, C2 et C3 s'ouvrent et le gaz (G), issu des décompositions de <S, G> va se condenser dans le condenseur et s'écouler vers le collecteur Co. La chaleur de condensation est évacuée par le fluide F1.

Cette opération est menée jusqu'à ce que les réacteurs ne contiennent plus que du solide <S>, c'est-à-dire jusqu'à ce qu'on soit ramené à l'étape 0 (état initial).

Comme décrit en référence au dispositif à deux réacteurs, les techniques utilisées pour le contrôle des températures (VPC) et pour le dégivrage peuvent être appliquées à ce dispositif à trois réacteurs.

Il ressort de la description précitée que le troisième réacteur R3 permet de stocker de l'énergie sans apport d'énergie autre que celle nécessaire à la circulation du fluide caloporteur F4.

Les dispositifs que l'on vient de décrire, produisant du froid en continu, permettent de produire du froid jusqu'à -40°C dans l'enceinte à réfrigérer, à condition que la température maximum à l'extérieur de celle-ci soit

au plus égale à 30°C, l'écart du point Q (figure 2) par rapport à la droite d'équilibre J étant de 20°C et la température de condensation étant de 35°C.

A cet effet, il faut :

1) réaliser à l'intérieur du réacteur R les réactions simultanées suivantes :

<X, $mNH_3$> + $n(NH_3)$ → <X,$(m+n)NH_3$>
$n[NH_3] \rightarrow n(NH_3)$
puis <X,$(m+n)NH_3$> → <X,$mNH_3$> + $n(NH_3)$
$n(NH_3) \rightarrow n[NH_3]$

X étant choisi parmi le $ZnCl_2$, le $CuSO_4$, le CuCl, le LiBr, le LiCl, le $ZnSO_4$, le $SrCl_2$, le $MnCl_2$, le $FeCl_2$, le $MgCl_2$, le $CaCl_2$ et le $NiCl_2$, <u>m</u> et <u>n</u> étant des nombres tels que :

m=3, n=1 si X = $ZnSO_4$
m=4, n=1 si X = $CuSO_4$
m=0, n=1 si X = LiCl, $SrCl_2$
m=1, n=1 si X = LiCl, $CaCl_2$
m=2, n=2 si X = $ZnCl_2$, $CuSO_4$
m=1, n=0,5 si X = CuCl
m=2, n=1 si X = LiBr, $ZnSO_4$
m=2, n=4 si X = $MnCl_2$, $FeCl_2$, $NiCl_2$
m=4, n=2 si X = $MgCl_2$

2) que la source S de chaleur extérieure soit à une température $T_h$ supérieure à une valeur telle que :

si X = $ZnCl_2$(m=2, n=2) $T_h$ = 139°C
si X = $CuSO_4$(m=4, n=1) $T_h$ = 145°C
si X = CuCl(m=1, n=0,5) $T_h$ = 151°C
si X = LiBr(m=2, n=1) $T_h$ = 155°C
si X = LiCl(m=1, n=1) $T_h$ = 167°C
si X = $ZnSO_4$(m=3, n=1) $T_h$ = 173°C
si X = $SrCl_2$(m=0, n=1) $T_h$ = 173°C
si X = $MnCl_2$(m=2, n=4) $T_h$ = 174°C
si X = LiCl(m=0, n=1) $T_h$ = 203°C
si X = $FeCl_2$(m=2, n=4) $T_h$ = 208°C
si X = $MgCl_2$(m=4, n=2) $T_h$ = 217°C
si X = $CuSO_4$(m=2, n=2) $T_h$ = 230°C
si X = $ZnSO_4$(m=2, n=1) $T_h$ = 247°C
si X = $CaCl_2$(m=1, n=1) $T_h$ = 265°C
si X = $NiCl_2$(m=2, n=4) $T_h$ = 282°C

Si l'on veut produire du froid jusqu'à +10°C dans l'enceinte à réfrigérer, la température maximum à l'extérieur de celle-ci étant au plus égale à +80°C, l'écart du point Q (figure 2) par rapport à la droite d'équilibre J étant de 20°C et la température de condensation étant de 85°C, à l'aide des mêmes réactions solide-gaz, la température $T_h$ de la source S devra être supérieure à une valeur telle que :

si X = $ZnCl_2$(m=2, n=2) $T_h$ = 162°C
si X = $CuSO_4$(m=4, n=1) $T_h$ = 170°C
si X = CuCl(m=1, n=0,5) $T_h$ = 180°C
si X = LiBr(m=2, n=1) $T_h$ = 196°C
si X = $ZnSO_4$(m=3, n=1) $T_h$ = 200°C
si X = LiCl(m=1, n=1) $T_h$ = 208°C
si X = $MnCl_2$(m=2, n=4) $T_h$ = 212°C
si X = $SrCl_2$(m=0, n=1) $T_h$ = 217°C
si X = LiCl(m=0, n=1) $T_h$ = 249°C
si X = $FeCl_2$(m=2, n=4) $T_h$ = 256°C
si X = $MgCl_2$(m=4, n=2) $T_h$ = 256°C
si X = $CuSO_4$(m=2, n=2) $T_h$ = 265°C
si X = $ZnSO_4$(m=2, n=1) $T_h$ = 282°C
si X = $CaCl_2$(m=1, n=1) $T_h$ = 311°C
si X = $NiCl_2$(m=2, n=4) $T_h$ = 338°C

On peut donc à l'aide d'une même réaction choisie parmi les réactions ci-dessus et en utilisant une source de chaleur S dont la température est à la valeur appropriée, produire du froid en continu à une température comprise entre +10°C et -40°C.

Les dispositifs à deux ou trois réacteurs que l'on vient de décrire peuvent être transformés en dispositifs

permettant une production continue de chaleur, en remplaçant l'évaporateur E et le condenseur C par deux réacteurs, chacun de ces réacteurs contenant le même solide susceptible de réagir avec le gaz, de façon à réaliser dans ces deux paires de réacteurs successivement les réactions mentionnées au paragraphe B de l'introduction de la présente description.

Bien entendu, l'invention n'est pas limitée aux exemples de réalisation que l'on vient de décrire et on peut apporter à ceux-ci de nombreuses modifications sans sortir du cadre de l'invention.

Ainsi, la source de chaleur S utilisée pour chauffer les réacteurs R, R1, R2, R3 peut être toute source de chaleur d'origine thermique ou électrique disponible. En particulier, cette source de chaleur peut être constituée par des rejets thermiques.

Le fluide F4 peut être tout autre fluide caloporteur que de l'huile.

Par ailleurs, les fluides F1, F2, F3 peuvent être autres que de l'air.

Bien entendu, le procédé et le dispositif conformes à l'invention peuvent être appliqués à la climatisation des bâtiments, en particulier des locaux d'habitation.

Dans la réalisation de la figure 17, le dispositif produit de la chaleur. Il comprend deux paires de réacteurs $R_1$, $R_2$ identiques à ceux décrits précédemment et contenant chacun un composé solide susceptible de réagir avec le gaz G. Des circuits sont prévus entre les différents réacteurs et des moyens sont prévus pour déclencher successivement les réactions solide-gaz dans les réacteurs et pour commander les ouvertures et les fermetures des différents circuits de communication dans un ordre prédéterminé pour obtenir une production continue de chaleur.

Ce dispositif est proche du précédent mais au lieu d'effectuer la condensation et l'évaporation du gaz G, on le fait réagir avec un deuxième solide $S_2$.

On réalise ainsi successivement (voir figure 17) les réactions suivantes :

Phase I :

<S2, G> → <S2> + (G) - ΔH2
<S1> + (G) → <S1, G> + ΔH1

Phase II :

<S1, G> → <S1> + (G) - ΔH1
<S2> + (G) → <S2, G> + ΔH2

Comme précédemment, on peut représenter le fonctionnement du dispositif dans un diagramme pression/température (voir figure 2A).

Sur cette figure :

(I) est la droite d'équilibre <S1> + (G) → <S1, G>
(J) est la droite d'équilibre <S2> + (G) → <S2, G>

Le fluide G est toujours à l'état gazeux et circule alternativement entre deux réacteurs $R_1$, $R_2$ dont l'un contient le solide <S1> (ou <S1, G>) et l'autre solide <S2> (ou <S2, G>).

Si ce dispositif est utilisé comme pompe à chaleur, le bilan énergétique s'établit comme suit :

– apport à TD2 de ΔH2
– utilisation à T1S de ΔH1 et à T2S de ΔH2
– "pompage" à TD1 de ΔH1 (énergie gratuite).

Comme dans la réalisation précédente, les différents cycles de fonctionnement peuvent être déclenchés au moyen d'électrovannes, clapets anti-retour et analogues.

## Revendications

1. Procédé pour produire du froid, mettant en oeuvre un dispositif comprenant deux réacteurs (R1, R2) qui contiennent un composé solide susceptible de réagir avec un gaz selon une réaction exothermique, ces réacteurs étant reliés à un condenseur (C), un collecteur de gaz (Co) et un évaporateur (E), l'intérieur des réacteurs étant en relation d'échange thermique avec une source (S) de chaleur, des moyens étant prévus pour déclencher successivement les réactions solide-gaz dans les deux réacteurs et pour commander les ouvertures et fermetures des différents circuits de communication entre les réacteurs, le condenseur, le collecteur et l'évaporateur, dans un ordre prédéterminé pour obtenir une production continue de froid, ledit procédé comprenant

les étapes suivantes :

A) ouverture du circuit entre l'un (R1) des réacteurs et l'évaporateur (E) et entre ce dernier et le collecteur de gaz (Co) dès que la pression du gaz dans l'évaporateur (E) est supérieure à celle dans le réacteur (R1),

B) ouverture du circuit entre l'autre réacteur (R2) et l'évaporateur (E) et entre ce dernier et le collecteur de gaz (Co) dès que la pression du gaz dans l'évaporateur (E) est supérieure à celle dans le réacteur (R2),

C) ouverture du circuit entre le réacteur (R1) et la source (S) de chaleur extérieure pour chauffer le solide contenu dans ce réacteur,

D) fermeture sous l'effet de la pression régnant dans le réacteur (R1) du circuit compris entre ce dernier et l'évaporateur (E) et ouverture du circuit entre le réacteur (R1) et le condenseur (C) dès que la pression dans le réacteur (R1) est supérieure à celle dans le condenseur (C),

E) fermeture du circuit entre le réacteur (R1) et la source (S) de chaleur et ouverture du circuit entre le réacteur (R2) et la source (S) de chaleur,

F) fermeture sous l'effet de la pression régnant dans le réacteur (R2) du circuit compris entre ce dernier et l'évaporateur (E) et ouverture du circuit entre le réacteur (R2) et le condenseur (C) dès que la pression dans le réacteur (R2) est supérieure à celle dans le condenseur (C),

G) fermeture, après baisse de pression dans le réacteur (R1) du circuit entre celui-ci et le condenseur (C) et ouverture du circuit entre ce réacteur (R1) et l'évaporateur (E),

et, pour assurer le dégivrage pendant une des étapes B-G,

H) fermeture des circuits entre l'évaporateur (E) et les deux réacteurs (R1) et (R2), ouverture du circuit entre l'évaporateur (E) et le condenseur (C) et ouverture du circuit entre l'évaporateur (E) et le collecteur de gaz (Co).

2. Procédé conforme à la revendication 1, caractérisé en ce qu'il comprend après l'étape de dégivrage, l'étape suivante :

- fermeture des circuits entre l'évaporateur (E) et le condenseur (C) et entre l'évaporateur (E) et le collecteur de gaz (Co).

3. Procédé conforme à l'une des revendications 1 ou 2 mettant en oeuvre un troisième réacteur (R3) renfermant ledit composé solide susceptible de réagir avec le gaz et relié avec la source (S) de chaleur extérieure, le condenseur (C), le collecteur (Co) et l'évaporateur (E), des moyens étant prévus pour déclencher successivement les réactions solide-gaz dans les trois réacteurs (R1, R2, R3) d'une manière telle que le troisième réacteur (R3) puisse stocker de l'énergie sans apport d'énergie autre que celle nécessaire à la circulation du fluide caloporteur (F4), caractérisé en ce qu'il comprend l'étape suivante :

- ouverture du circuit entre le troisième réacteur (R3) et l'évaporateur (E) et entre ce dernier et le collecteur (Co).

4. Procédé conforme à l'une des revendications 1 à 3, caractérisé en ce que le fluide caloporteur (F4) circulant entre les réacteurs et la source extérieure de chaleur est de l'huile.

5. Procédé conforme à l'une des revendications 1 à 4, caractérisé en ce que pour évacuer la chaleur dégagée lors de la réaction solide-gaz et pour évacuer la chaleur de condensation, on réalise un échange thermique avec l'air ambiant.

## Patentansprüche

1. Verfahren zur Kälteerzeugung unter Einsatz einer Vorrichtung mit zwei Reaktoren (R1,R2), die eine zu einer exothermen Reaktion mit einem Gas fähige feste Verbindung enthalten, wobei diese Reaktoren mit einem Kondensator (C), einem Gassammler (Co) und einem Verdampfer (E) verbunden sind und das Innere der Reaktoren in Wärmeaustauschbeziehung mit einer Wärmequelle (S) steht, und wobei Mittel zum aufeinanderfolgenden Auslösen der Feststoff-Gas-Reaktionen in den beiden Reaktoren und zum Steuern der Öffnungen und Schließungen verschiedener Verbindungskreise zwischen den Reaktoren, dem Kondensator, dem Sammler und dem Verdampfer in einer vorbestimmten Reihenfolge zur Erzielung einer kontinuierlichen Kälteerzeugung vorgesehen sind, welches Verfahren die folgenden Schritte umfaßt:

A) Öffnen des Kreises zwischen dem einen (R1) der Reaktoren und dem Verdampfer (E) sowie zwischen letzterem und dem Gassammler (Co), sobald der Druck des Gases im Verdampfer (E) höher ist als der im Reaktor (R1),

B) Öffnen des Kreises zwischen dem anderen Reaktor (R2) und dem Verdampfer (E) sowie zwischen letzterem und dem Gassammler (Co), sobald der Druck des Gases im Verdampfer (E) höher ist als der im Reaktor (R2),

C) Öffnen des Kreises zwischen dem Reaktor (R1) und der externen Wärmequelle (S), um den in diesem Reaktor enthaltenden Feststoff zu erwärmen,

D) Schließen des zwischen dem Reaktor (R1) und dem Verdampfer (E) enthaltenen Kreises unter der Wirkung des in diesem Reaktor herrschenden Drucks und Öffnen des Kreises zwischen dem Reaktor (R1) und dem Kondensator (C), sobald der Druck im Reaktor (R1) höher ist als der im Kondensator (C),
E) Schließen des Kreises zwischen dem Reaktor (R1) und der Wärmequelle (S) und Öffnen des Kreises zwischen dem Reaktor (R2) und der Wärmequelle (S),
F) Schließen des zwischen dem Reaktor (R2) und dem Verdampfer (E) enthaltenen Kreises unter der Wirkung des in diesem Reaktor herrschenden Drucks und Öffnen des Kreises zwischen dem Reaktor (R2) und dem Kondensator (C), sobald der Druck im Reaktor (R2) höher ist als der im Kondensator (C),
G) Schließen des Kreises zwischen dem Reaktor (R1) und dem Kondensator (C) nach Sinken des Drucks in diesem Reaktor und Öffnen des Kreises zwischen diesem Reaktor (R1) und dem Verdampfer (E), und, um die Enteisung während eines der Schritte B-G sicherzustellen,
H) Schließen der Kreise zwischen dem Verdampfer (E) und den beiden Reaktoren (R1) und (R2), Öffnen des Kreises zwischen dem Verdampfer (E) und dem Kondensator (C) und Öffnen des Kreises zwischen dem Verdampfer (E) und dem Gassammler (Co).

2. Verfahren nach Anspruch 1, dadurch gekennzeichnet, daß es nach dem Enteisungsschritt folgenden Schritt umfaßt:

- Schließen der Kreise zwischen dem Verdampfer (E) und dem Kondensator (C) und zwischen dem Verdampfer (E) und dem Gassammler (Co).

3. Verfahren nach Anspruch 1 oder 2, unter Einsatz eines dritten Reaktors (R3), der die genannte zu einer Reaktion mit dem genannten Gas fähige feste Verbindung enthält und mit der externen Wärmequelle (S), dem Kondensator (C), dem Sammler (Co) und dem Verdampfer (E) verbunden ist, wobei Mittel zum aufeinanderfolgenden Auslösen der Feststoff-Gas- Reaktionen in den drei Reaktoren (R1,R2,R3) in der Weise vorgesehen sind, daß der dritte Reaktor (R3) Energie ohne Zufuhr von Energie außer der für die Umwälzung des flüssigen Kühlmittels (F4) notwendigen Energie speichern kann, dadurch gekennzeichnet, daß es den folgenden Schritt umfaßt:

- Öffnen des Kreises zwischen dem dritten Reaktor (R3) und dem Verdampfer (E) und zwischen letzterem und dem Sammler (Co).

4. Verfahren nach einem der Ansprüche 1 bis 3, dadurch gekennzeichnet, daß das zwischen den Reaktoren und der externen Wärmequelle zirkulierende flüssige Kühlmittel (F4) Öl ist.

5. Verfahren nach einem der Ansprüche 1 bis 4, dadurch gekennzeichnet, daß zur Abfuhr der bei der Feststoff-Gas-Reaktion freigesetzten Wärme und zur Abfuhr der Kondensationswärme ein Wärmeaustausch mit der Umgebungsluft realisiert wird.

## Claims

1. A method for producing cold, employing a device comprising two reactors (R1, R2) which contain a solid compound capable of reacting with a gas according to an exothermic reaction, these reactors being connected to a condenser (C), a gas collector (Co) and an evaporator (E), the inside of the reactors being in a heat exchange relationship with the heat source (S), means being provided for successively starting the solid-gas reactions in the two reactors and for controlling the openings and closings of various communication circuits between the reactors, the condenser, the collector and the evaporator, in a predetermined order to obtain a continuous production of cold, said method comprising the steps of :
A) opening the circuit between one (R1) of the reactors and the evaporator (E) and between the latter and the gas collector (Co) as soon as the gas pressure within the evaporator exceeds the gas pressure within said reactor (R1),
B) opening the circuit between the other reactor (R2) and the evaporator (E) and between the latter and the gas collector (Co) as soon as the gas pressure within the evaporator exceeds the gas pressure within said reactor (R2),
C) opening the circuit between the reactor (R1) and the external heat source (S) for heating the solid contained in said reactor,
D) closing the circuit extending between the reactor (R1) and the evaporator (E) under the action of the pressure within said reactor (R1), and opening the circuit between the reactor (R1) and the condenser (C) as soon as the pressure within said reactor (R1) exceeds the pressure within the condenser (C),
E) closing the circuit between the reactor (R1) and the heat source (S), and opening the circuit between the reactor (R2) and the heat source (S),
F) closing the circuit extending between the reactor (R2) and the evaporator (E) under the action of the pressure within said reactor (R2), and opening the circuit between the reactor (R2) and the condenser (C)

as soon as the pressure within said reactor (R2) exceeds the pressure within the condenser (C),

G) closing the circuit between the reactor (R1) and the condenser (C) after lowering of the pressure within said reactor (R1), and opening the circuit between said reactor (R1) and the evaporator (E),

and, for providing a defrosting during one of steps B-G,

H) closing the circuits between the evaporator (E) and both reactors (R1) and (R2), opening the circuit between the evaporator (E) and the condenser (C), and opening the circuit between the evaporator (E) and the gas collector (Co).

2. A method according to claims 1, characterized in that, after the defrosting step, it further comprises the step of :

- closing the circuits between the evaporator (E) and the condenser (C), and between the evaporator (E) and the gas collector (Co).

3. A method according to one of the claims 1 and 2, employing a third reactor (R3) containing said solid compound capable of reacting with the gas and connected to the external heat source (S), the condenser (C), the collector (Co), and the evaporator (E), means being provided for successively starting the solid-gas reactions in the three reactors (R1, R2, R3) so that energy can be stored in the third reactor (R3) without supplying more energy than necessary for circulating a heat transfer fluid (F4), characterized by the step of :

- opening the circuit between the third reactor (R3) and the evaporator (E), and between the latter and the collector (Co).

4. A method according to one of claims 1 to 3, characterized in that the heat transfer fluid (F4) circulating between the reactors and the external heat source is oil

5. A method according to one of claims 1 to 4, characterized in that, for evacuating the heat evolved during the solid-gas reaction and for evacuating the condensation heat, a heat exchange with the ambient air is carried out.

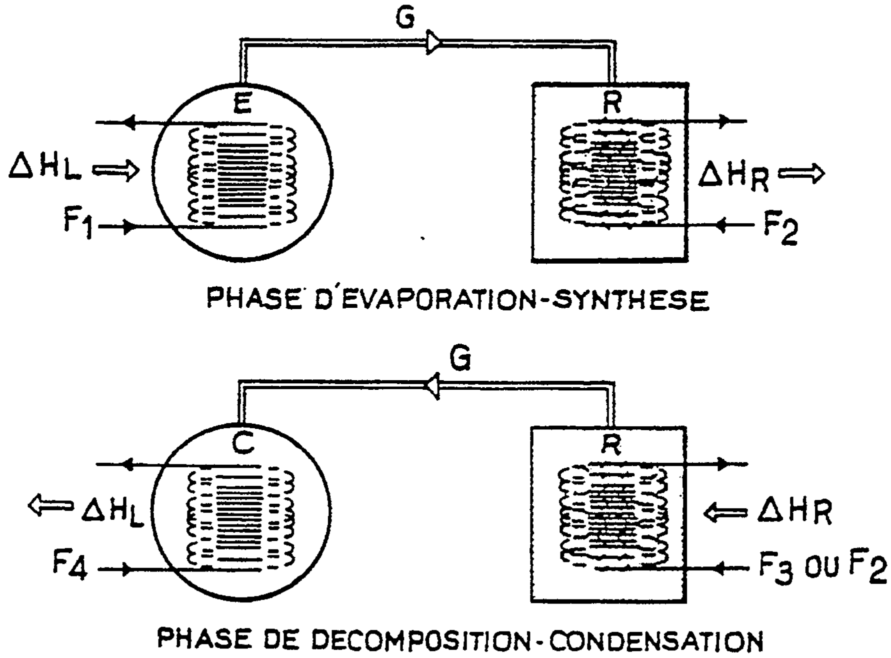
G
E
R
ΔHL
ΔHR
F1
F2
PHASE D'EVAPORATION-SYNTHESE
G
C
R
ΔHL
ΔHR
F4
F3 ou F2
PHASE DE DECOMPOSITION-CONDENSATION

FIG_1

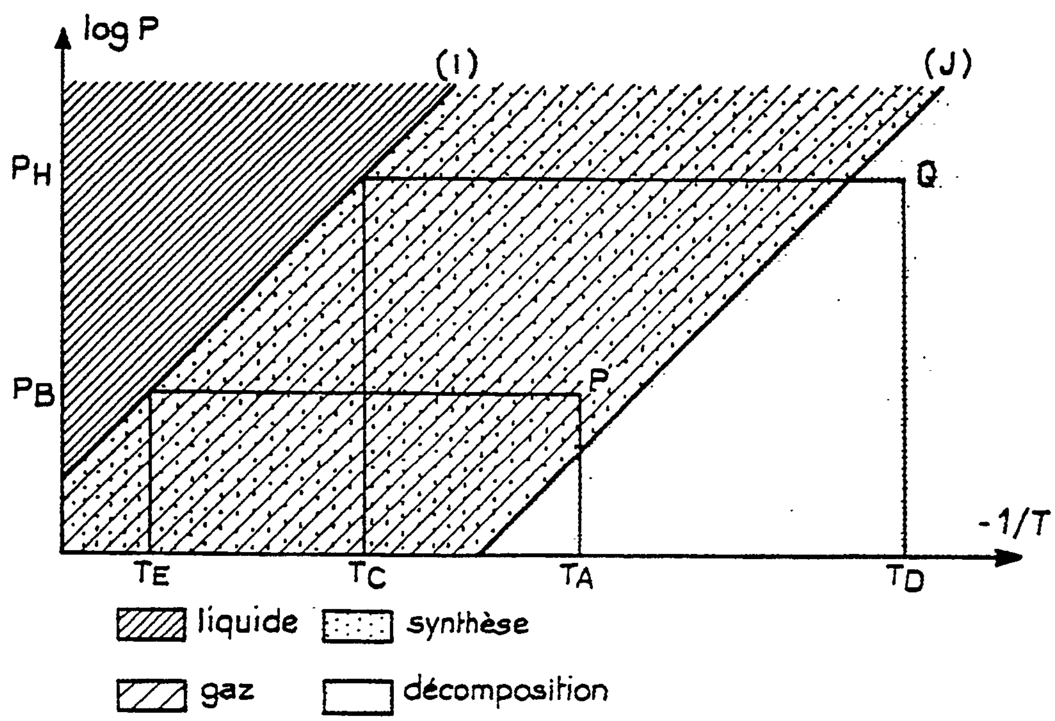
log P
(I)
(J)
PH
PB
Q
P
-1/T
TE
TC
TA
TD
liquide
synthèse
gaz
décomposition

FIG_2

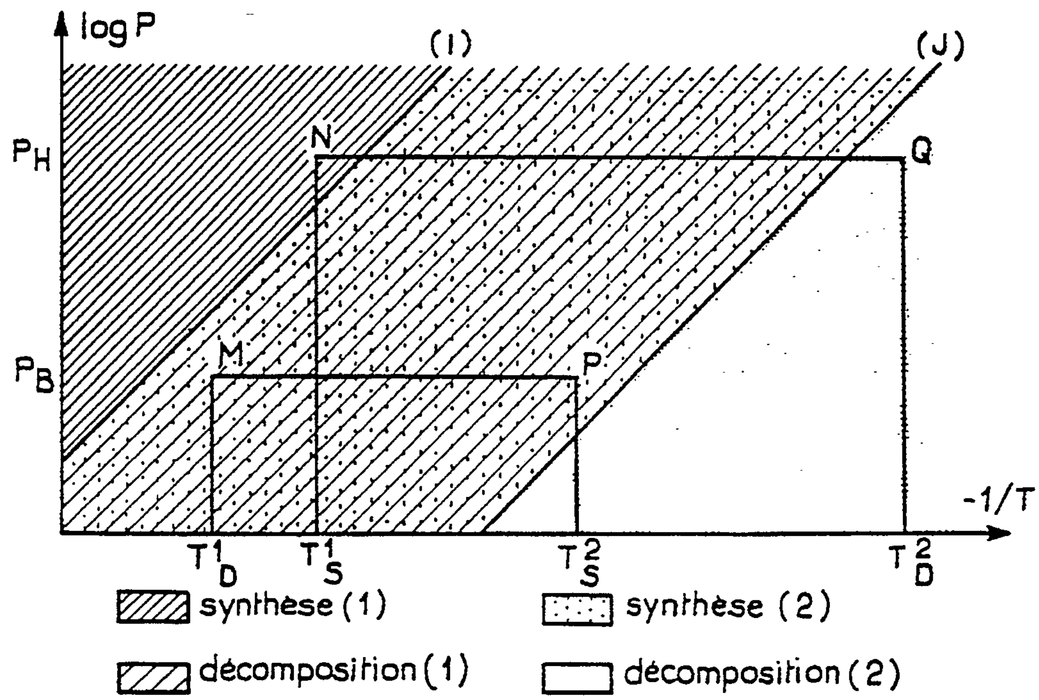
log P
(I)
(J)
P_H
N
Q
P_B
M
P
-1/T
T¹ D
T¹ S
T² S
T² D
synthèse (1)
synthèse (2)
décomposition (1)
décomposition (2)

FIG_2A

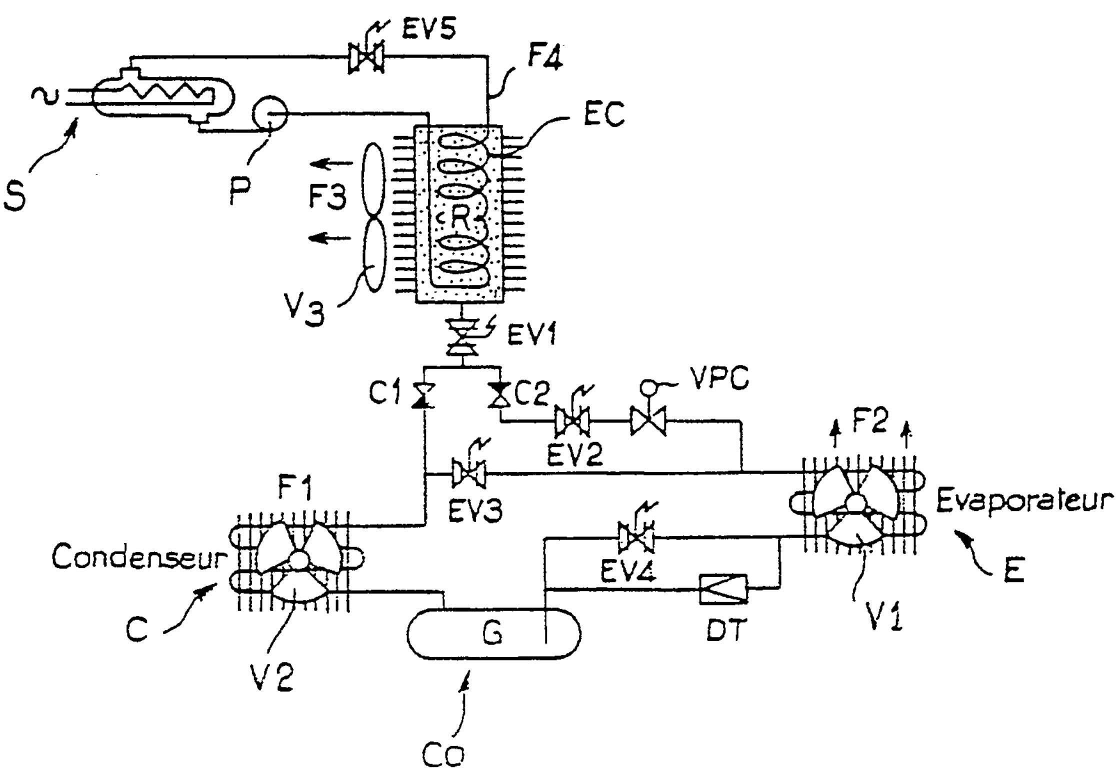
EV5
F4
EC
S
P
F3
R
V3
EV1
C1
C2
VPC
EV2
F2
F1
EV3
Evaporateur
Condenseur
EV4
E
C
G
DT
V1
V2
Co

FIG_3

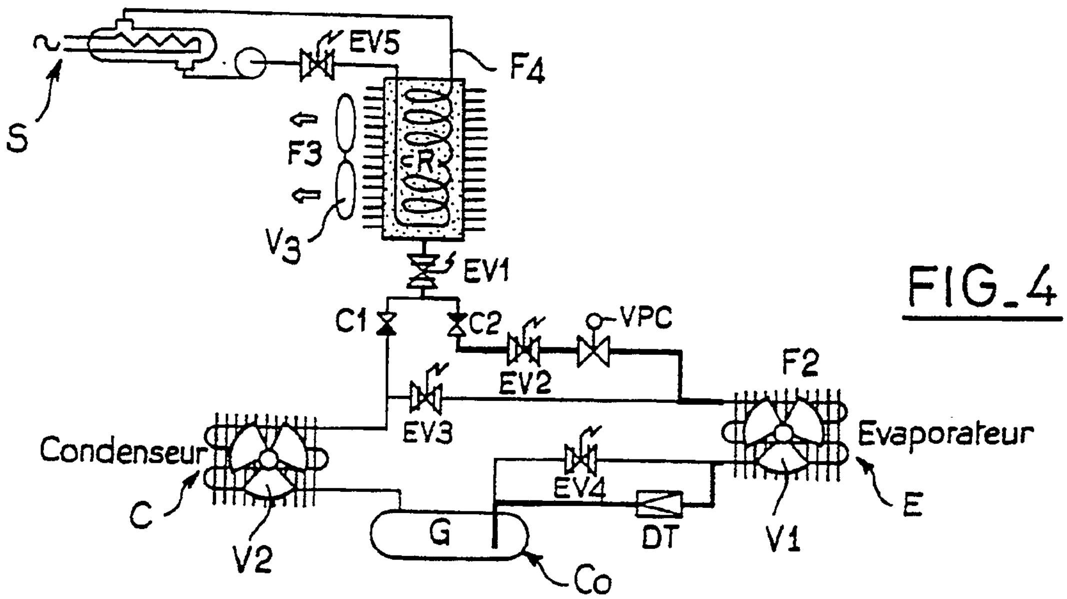


FIG_4

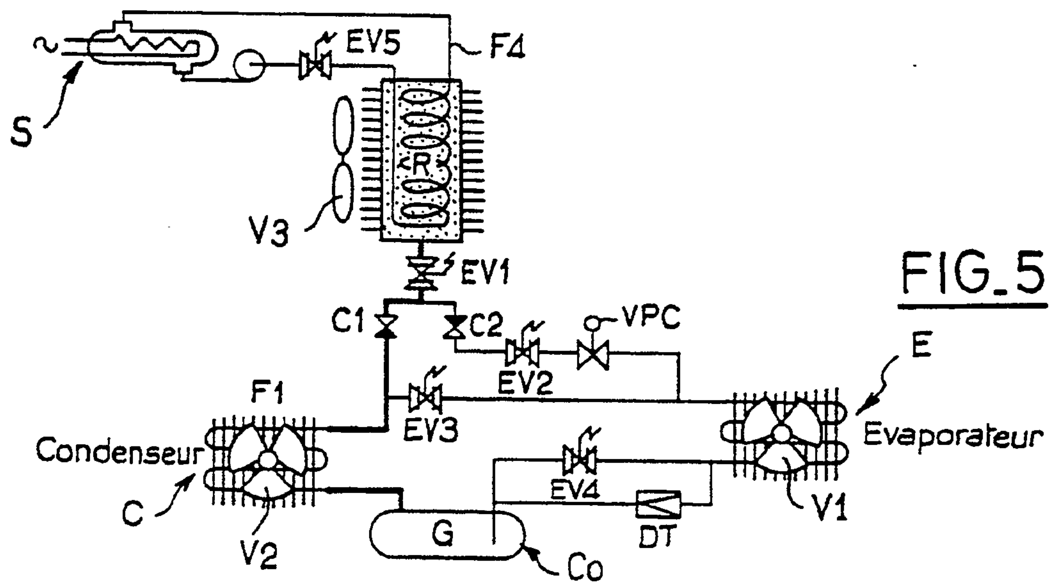


FIG_5

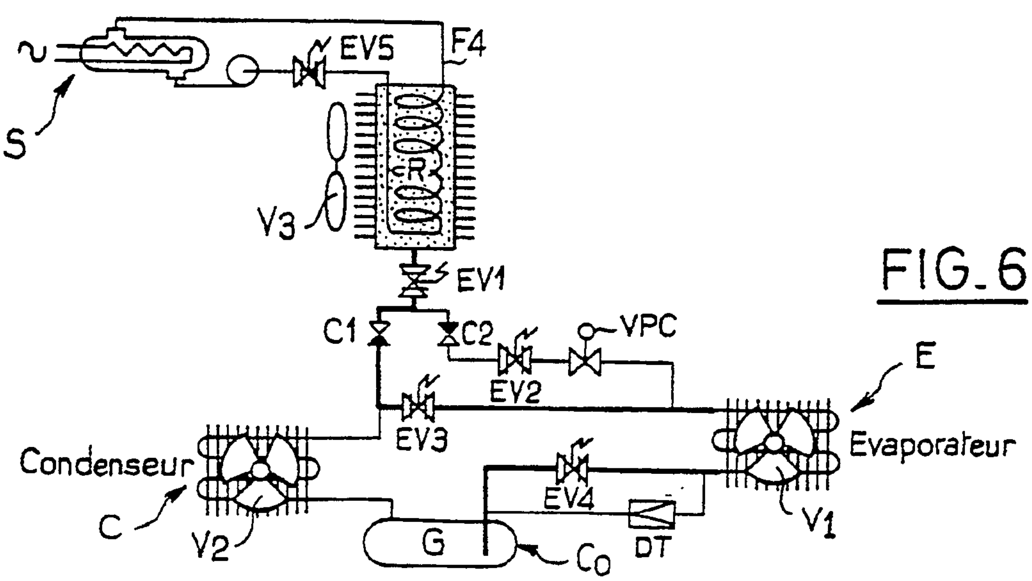


FIG_6

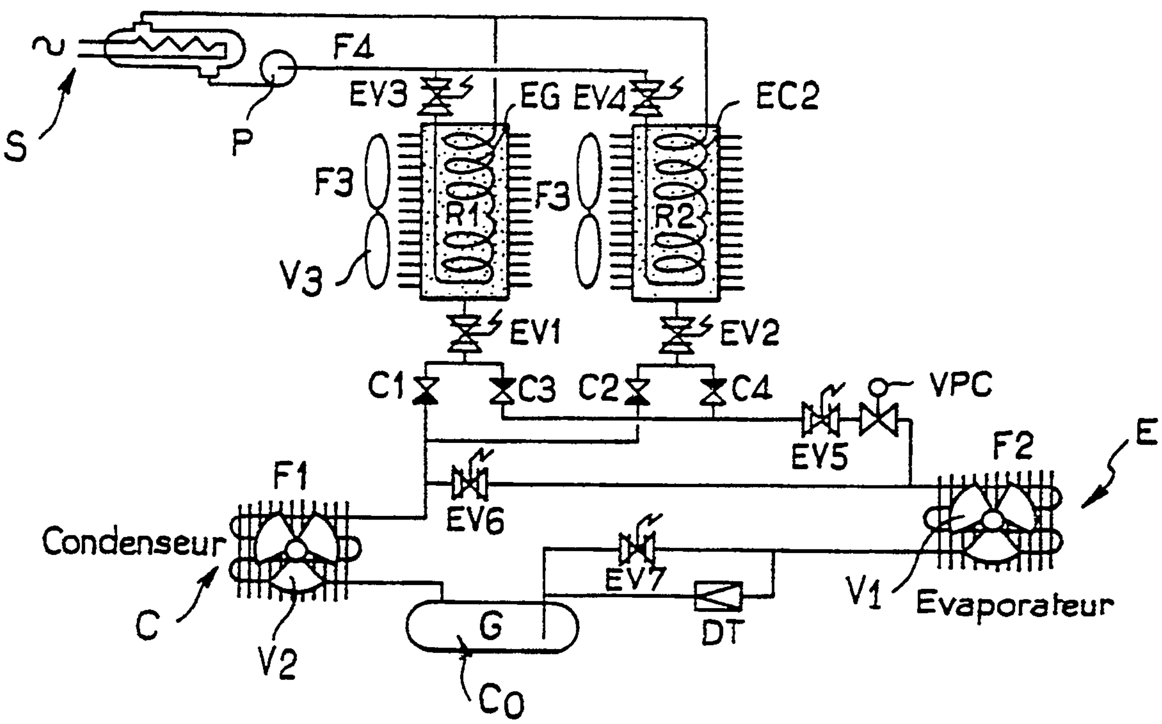
~
S
P
F4
EV3
EG
EV4
EC2
F3
R1
F3
R2
V3
EV1
EV2
C1
C3
C2
C4
VPC
EV5
E
F2
F1
EV6
Condenseur
EV7
C
V2
G
DT
V1
Evaporateur
C0

FIG_7

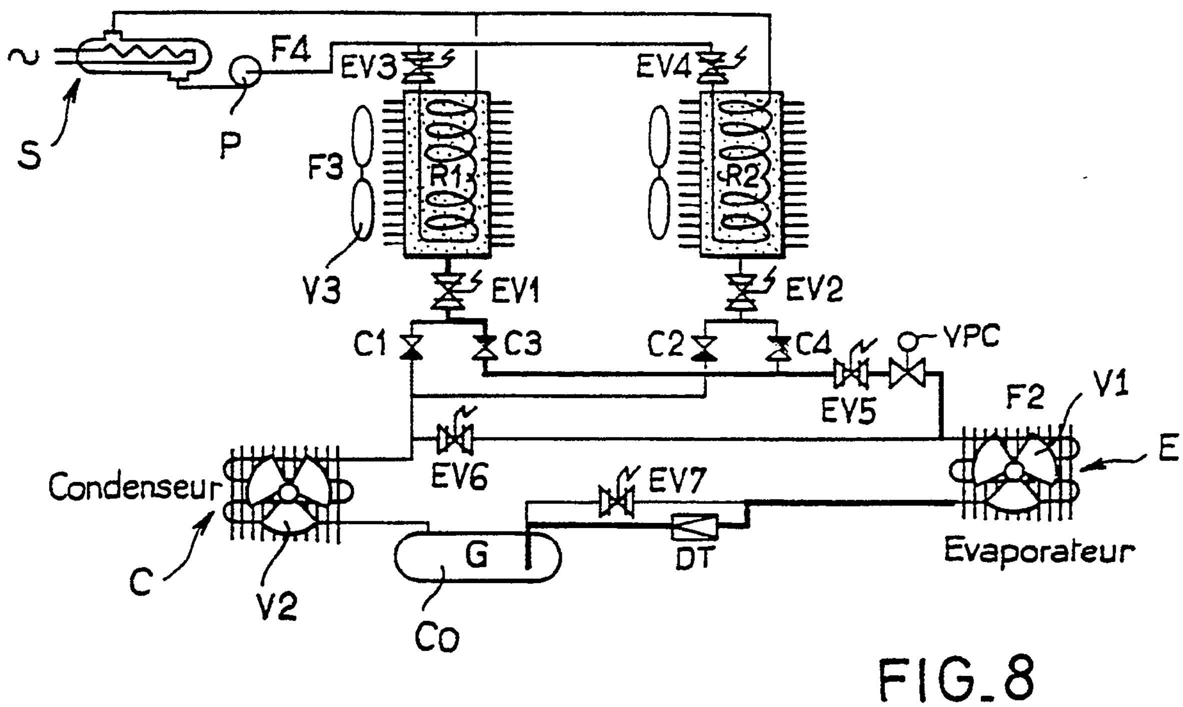
S
P
F4
EV3
EV4
F3
R1
R2
V3
EV1
EV2
C1
C3
C2
C4
VPC
EV5
F2
V1
E
EV6
EV7
Condenseur
G
DT
Evaporateur
C
V2
Co

FIG_8

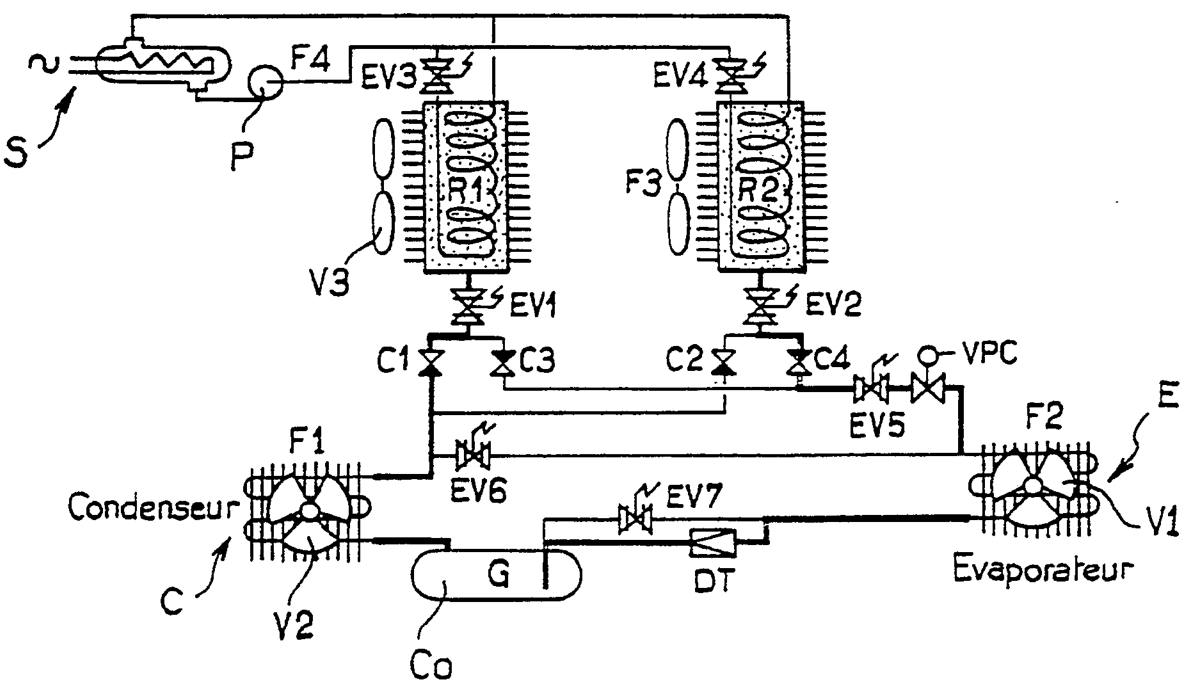
S
P
F4
EV3
EV4
V3
R1
F3
R2
EV1
EV2
C1
C3
C2
C4
VPC
EV5
E
F2
F1
EV6
EV7
Condenseur
V1
G
DT
Evaporateur
C
V2
Co

FIG_9

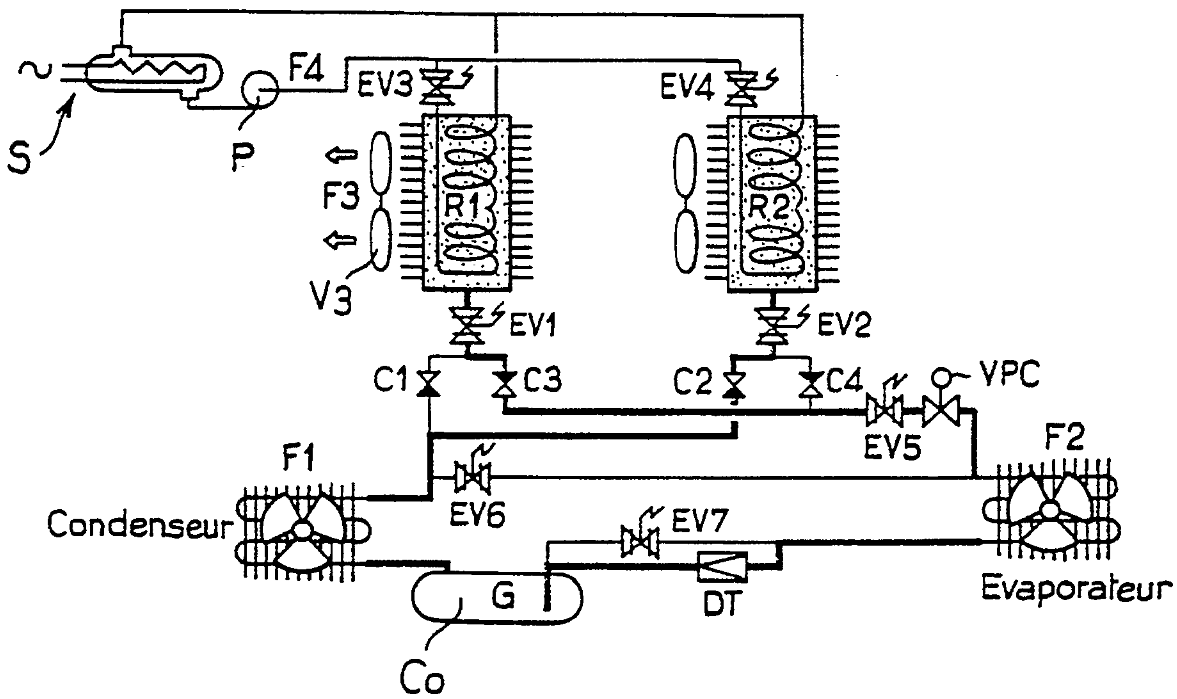
S
P
F4
EV3
EV4
F3
V3
R1
R2
EV1
EV2
C1
C3
C2
C4
VPC
EV5
F1
F2
Condenseur
EV6
EV7
G
DT
Evaporateur
Co

FIG_10

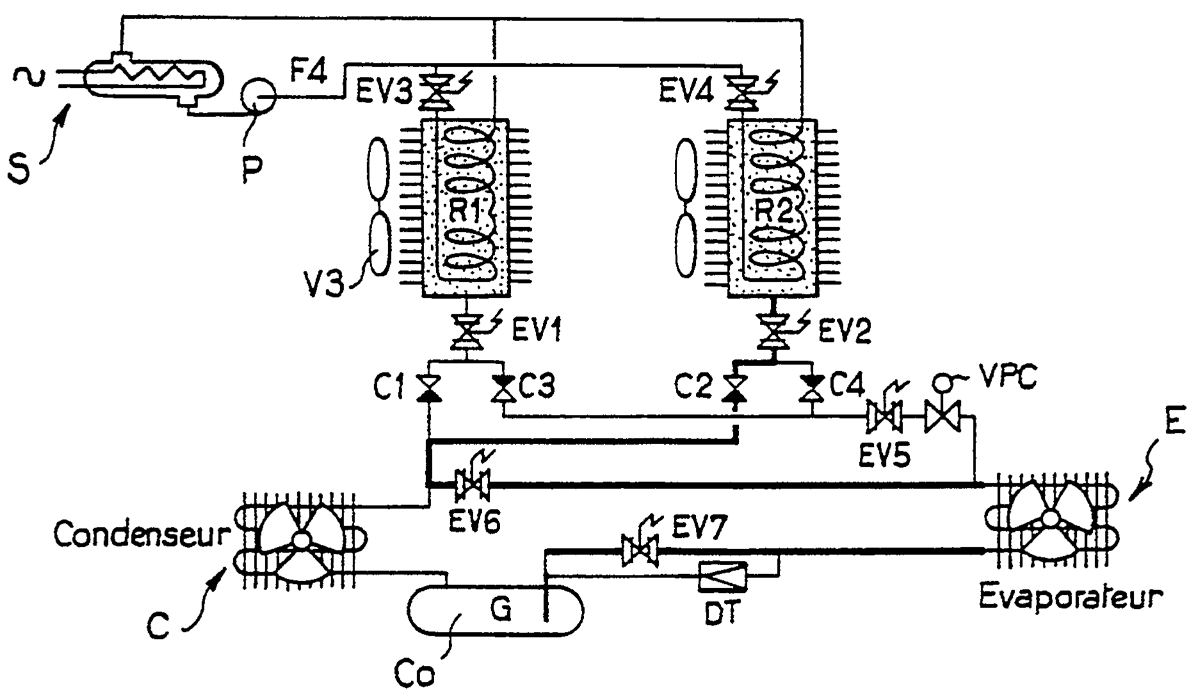
S
P
F4
EV3
EV4
V3
R1
R2
EV1
EV2
C1
C3
C2
C4
VPC
E
EV5
Condenseur
EV6
EV7
C
G
DT
Evaporateur
Co

FIG_11

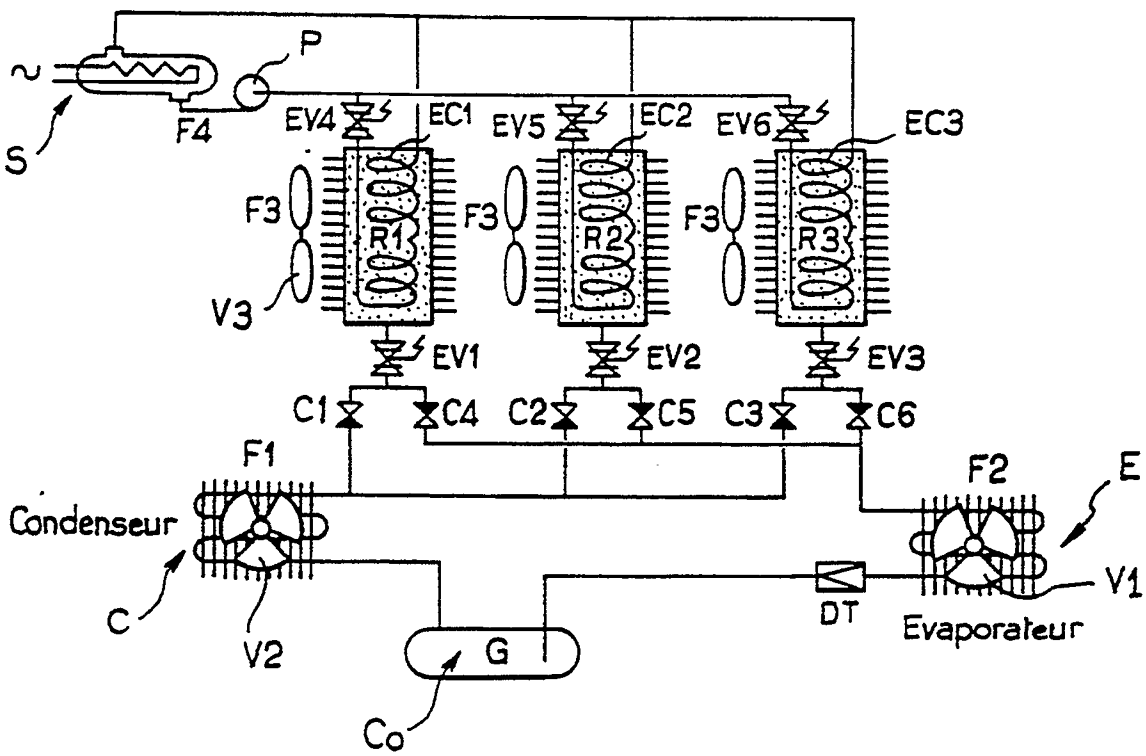
P
S
F4
EV4
EC1
EV5
EC2
EV6
EC3
F3
R1
F3
R2
F3
R3
V3
EV1
EV2
EV3
C1
C4
C2
C5
C3
C6
F1
F2
E
Condenseur
C
V2
G
Co
DT
V1
Evaporateur

FIG_12

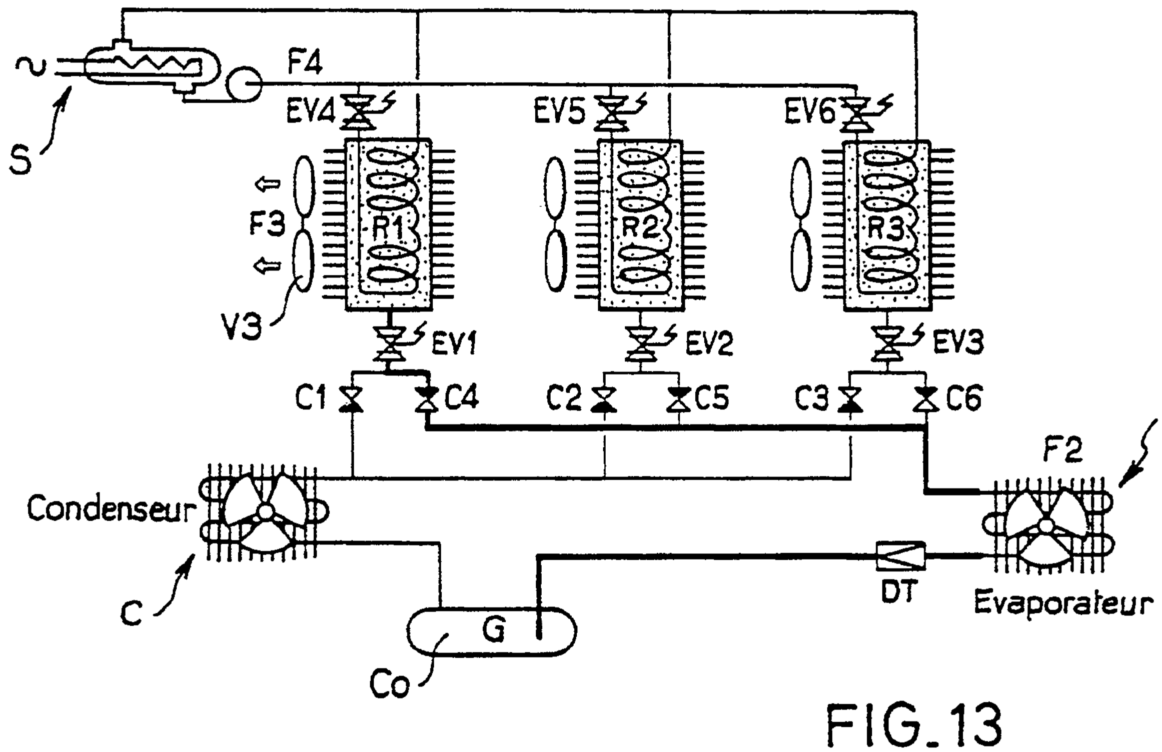
~
S
F4
EV4
EV5
EV6
F3
R1
R2
R3
V3
EV1
EV2
EV3
C1
C4
C2
C5
C3
C6
E
F2
Condenseur
C
G
Co
DT
Evaporateur

FIG_13

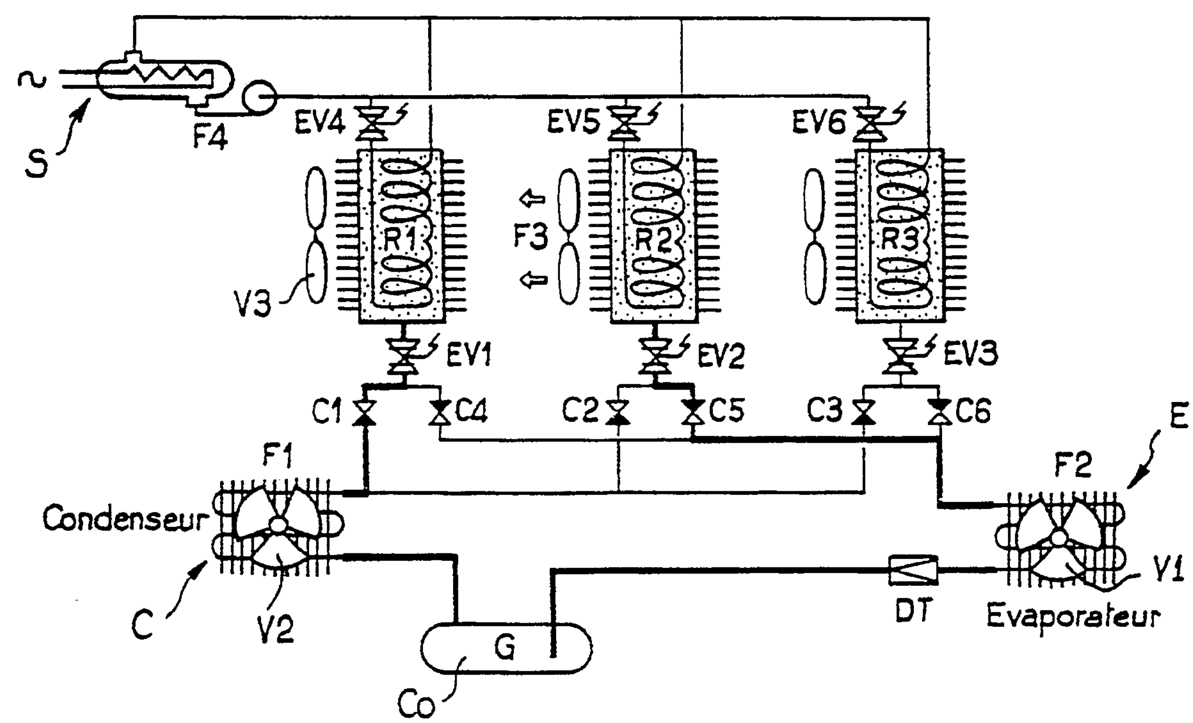
~
S
F4
EV4
EV5
EV6
R1
F3
R2
R3
V3
EV1
EV2
EV3
C1
C4
C2
C5
C3
C6
E
F1
F2
Condenseur
C
V2
G
Co
DT
V1
Evaporateur

FIG_14

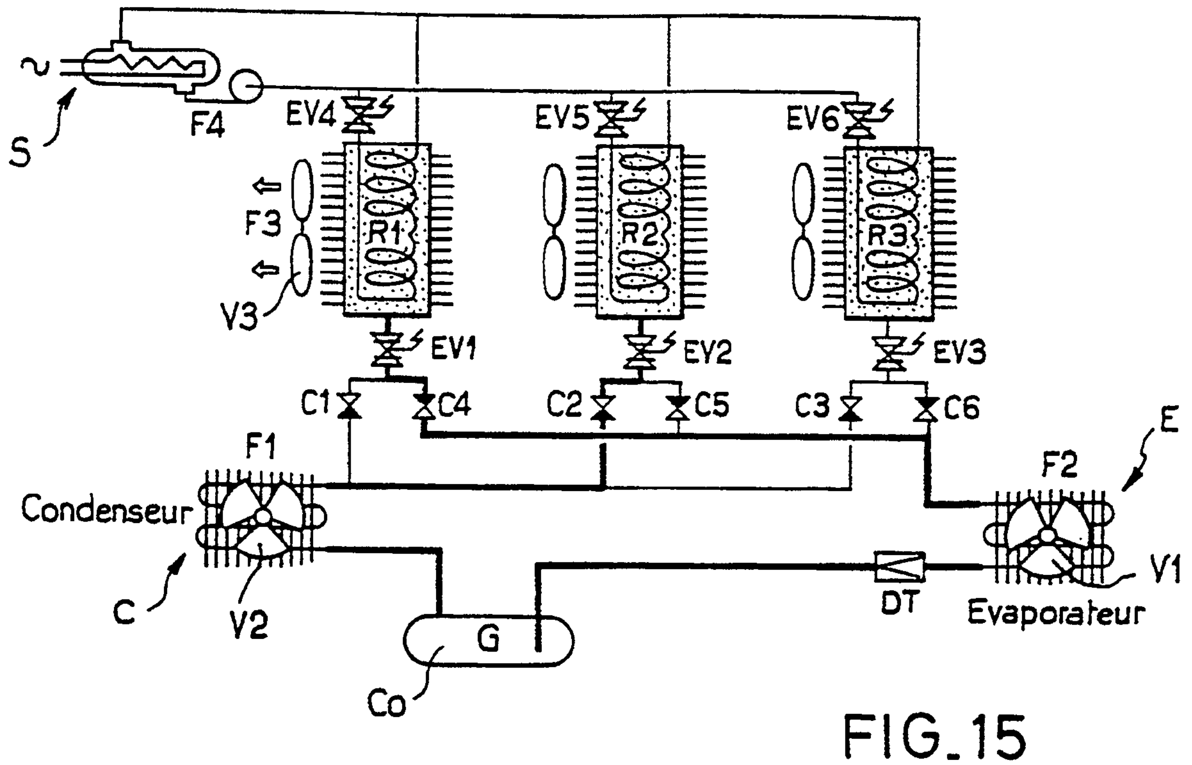
EV4
EV5
EV6
F4
S
F3
R1
R2
R3
V3
EV1
EV2
EV3
C1
C4
C2
C5
C3
C6
E
F1
F2
Condenseur
C
V2
G
DT
V1
Evaporateur
Co

FIG_15

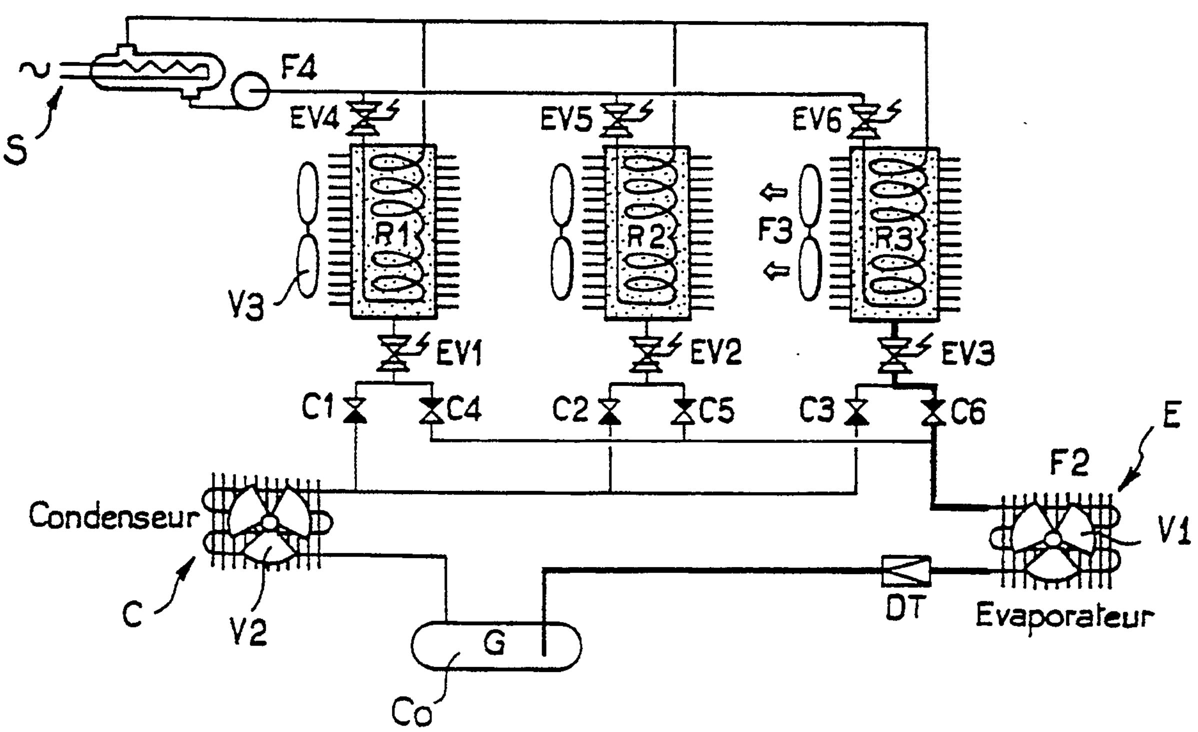
F4
S
EV4
EV5
EV6
R1
R2
R3
F3
V3
EV1
EV2
EV3
C1
C4
C2
C5
C3
C6
E
F2
Condenseur
V1
C
V2
G
DT
Evaporateur
Co

FIG_16

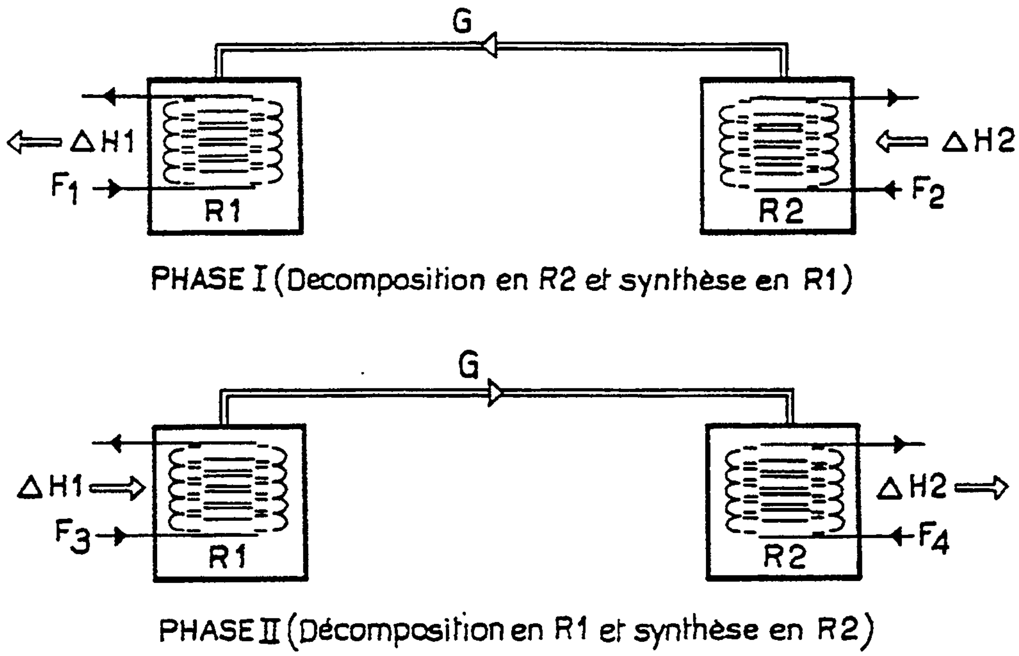
G
ΔH1
F1
R1
R2
ΔH2
F2
PHASE I (Decomposition en R2 et synthèse en R1)
G
ΔH1
F3
R1
R2
ΔH2
F4
PHASE II (Décomposition en R1 et synthèse en R2)

FIG_17